(19) Europäisches Patentamt / European Patent Office / Office européen des brevets

(11) **EP 2 380 267 B1**

(12) **FASCICULE DE BREVET EUROPEEN**

(45) Date de publication et mention
de la délivrance du brevet:
**07.09.2016 Bulletin 2016/36**

(21) Numéro de dépôt: **09795402.8**

(22) Date de dépôt: **15.12.2009**

(51) Int Cl.:
*H02M 3/07* *(2006.01)*   *H02M 3/158* *(2006.01)*
*H03K 17/687* *(2006.01)*   *H03K 19/0175* *(2006.01)*

(86) Numéro de dépôt international:
**PCT/EP2009/067223**

(87) Numéro de publication internationale:
**WO 2010/072626 (01.07.2010 Gazette 2010/26)**

(54) **CONVERTISSEUR DE TENSION CONTINUE-CONTINUE COMPORTANT UNE CAPACITÉ DE POMPE DE CHARGE**

GLEICHSTROM-GLEICHSTROM-SPANNUNGSWANDLER MIT EINEM LADUNGSPUMPENKONDENSATOR

DC TO DC VOLTAGE CONVERTER COMPRISING A CHARGE PUMP CAPACITOR

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **22.12.2008 FR 0807267**

(43) Date de publication de la demande:
**26.10.2011 Bulletin 2011/43**

(73) Titulaire: **Valeo Systèmes de Contrôle Moteur 95892 Cergy Pontoise (FR)**

(72) Inventeur: **LAURENT, Jean-Marie 78360 Montesson (FR)**

(56) Documents cités:
**EP-A- 1 919 082**   **DE-A1- 19 946 025**
**US-A1- 2005 168 206**   **US-A1- 2007 108 952**
**US-A1- 2007 182 395**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne le domaine de la conversion d'énergie et plus particulièrement les convertisseurs de tension continue-continue, bien connus de l'homme du métier sous leur dénomination anglaise « DC-DC » pour « Direct Current - Direct Current »; on parle donc classiquement de convertisseurs DC-DC. L'invention vise plus spécifiquement à optimiser les convertisseurs DC-DC embarqués dans un véhicule automobile pour obtenir, en sortie des convertisseurs, des tensions stables en limitant les pertes de conversion.

Les convertisseurs DC-DC peuvent être utilisés dans divers équipements électroniques d'un véhicule automobile. Leur fonction est de convertir une tension d'entrée (par exemple 24V) en une tension de sortie plus faible (par exemple 12V), afin d'alimenter des équipements du véhicule automobile. Des systèmes d'économie d'énergie, connus sous leur désignation anglaise « stop and start », limitant la consommation d'énergie lors de la conduite en ville en arrêtant automatiquement le moteur lorsque le véhicule est à l'arrêt, nécessitent des puissances électriques importantes. La tension du réseau de bord du véhicule habituelle 12V-14V ne convient plus pour ce type de système quand le moteur thermique est de cylindrée importante (>1.6L). Ce type de système nécessite des tensions plus importantes (par exemple 24V). Dans ce cas, le convertisseur est utilisé pour transformé la tension utilisée par le système « stop and start » (24V) en tension 12V et ainsi alimenter les équipements du véhicule automobile.

Un convertisseur DC-DC, aussi connu sous sa dénomination de « hacheur », est un dispositif d'électronique de puissance mettant en oeuvre un ou plusieurs interrupteurs, commandés par des contrôleurs, afin de découper la tension principale en une tension de sortie de valeur plus faible. Le découpage, ou hachage, se fait à une fréquence très élevée pour limiter la taille du convertisseur ainsi que les éléments de filtrage interne au convertisseur. La tension ainsi produite est continue.

De manière classique, un convertisseur DC-DC se présente sous la forme d'un circuit de conversion de tension comprenant une borne d'entrée, à laquelle est appliquée la tension d'entrée, une borne de sortie, sur laquelle est prélevée la tension de sortie, et une masse, le circuit formant une étoile à trois branches avec un centre.

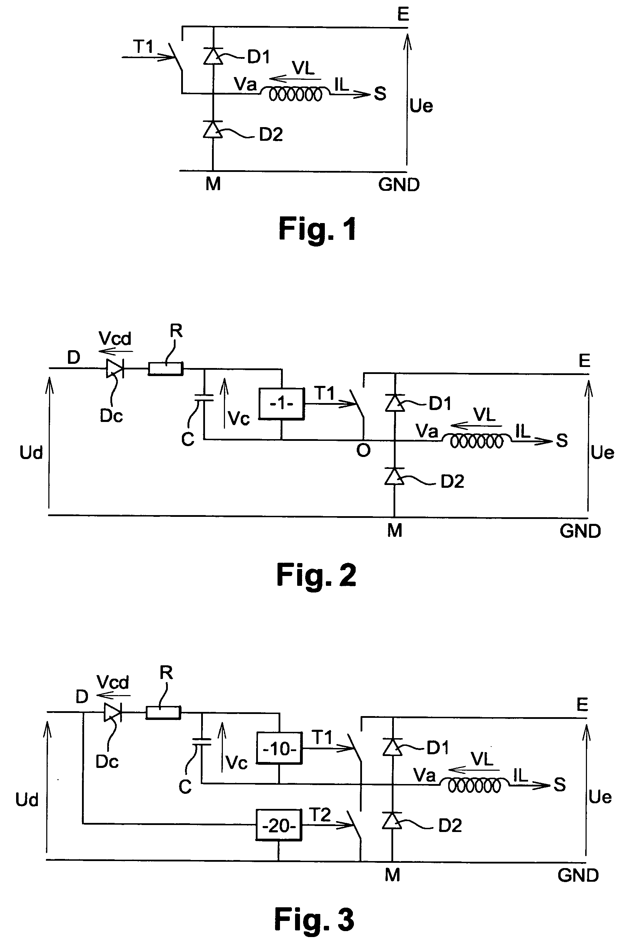

En référence à la figure 1, la branche d'entrée du circuit, reliant le centre de l'étoile avec la borne d'entrée, comprend un interrupteur, dit interrupteur supérieur T1. La branche de masse du circuit, reliant le centre de l'étoile avec la masse, comprend une diode, dite diode inférieure D2. La branche de sortie, reliant le centre de l'étoile avec la borne de sortie, comprend une inductance L dans laquelle circule un courant de sortie IL. La diode D2 a pour fonction de laisser passer le courant ou de le bloquer en fonction de l'état de l'interrupteur T1.

L'interrupteur supérieur T1, connu de l'homme du métier sous sa désignation anglaise « High Side», se présente généralement sous la forme d'un transistor (MOSFET/transistor bipolaire) qui est commandé individuellement par un contrôleur, relié à ses bornes, non représenté sur la figure 1. Pour que le contrôleur de commande de l'interrupteur supérieur T1 remplisse sa fonction de commande, il doit être relié à un potentiel constant de faible valeur (par exemple 12V). Ce potentiel constant de faible valeur remplit une fonction d'alimentation de ce contrôleur (désignation anglaise « driver »).

L'interrupteur supérieur T1 est relié, d'un côté, à la borne d'entrée (tension de valeur qu'on souhaite hacher), et d'un autre côté, au centre de l'étoile dont le potentiel électrique est variable. En raison des variations du potentiel électrique au centre de l'étoile, qui se trouve être le potentiel de référence de l'alimentation du contrôleur de l'interrupteur supérieur T1, cette alimentation n'est pas suffisamment stable.

Afin de réaliser l'alimentation du contrôleur de l'interrupteur supérieur T1, il est connu d'utiliser une capacité à « pompe de charge », plus connue sous sa dénomination anglaise « Boot Strap Capacitor », dans le circuit du convertisseur DC-DC. Cette utilisation permet de s'affranchir des problèmes de variation du potentiel du centre de l'étoile.

A cet effet, en référence à la figure 2, un convertisseur à « Boot Strap Capacitor » comprend, outre la borne d'entrée, la borne de sortie et la masse, une borne de commande reliée au centre de l'étoile par une branche de commande. Un module 1 de commande de l'interrupteur supérieur T1 est monté en parallèle avec la capacité C de pompe de charge dans la branche de commande du convertisseur, comme représenté sur la figure 2.

Lorsque l'interrupteur supérieur T1 est fermé, le potentiel du centre de l'étoile (Va) est égal au potentiel de la borne d'entrée (Ue). La capacité de pompe de charge C alimente le module 1 (la capacité se décharge). Le module de commande peut alors remplir sa fonction de commande de l'interrupteur supérieur T1.

Lorsque l'interrupteur supérieur T1 est ouvert, le courant de sortie IL ne pouvant s'annuler instantanément dans l'inductance L, c'est la diode D2 qui devient passante. Le potentiel au centre de l'étoile (Va) est à la masse. Le courant dans la capacité décroît.
Le potentiel de référence du module 1 qui est également le potentiel au centre de l'étoile se retrouve relié à la masse. Dans ce cas, l'alimentation du module 1 est réalisé par la tension Ud à travers la diode Dc (qui est passante) et la résistance R. EN même temps, la capacité C se recharge. Le but de la résistance R est de limiter le courant de recharge de la capacité C.

Si le courant IL est négatif, c'est la diode D1 qui est passante et le potentiel Va = Ue. La capacité de pompe de charge C se décharge pour alimenter le module de commande.

Enfin, si le courant de sortie IL est nul, le potentiel Va n'est référencé à aucune tension (potentiel flottant), capacité de pompe de charge C se décharge pour alimenter le module de commande.

Etant donné que la charge de la capacité C dépend de la valeur du courant de sortie IL, le temps de charge de la capacité C peut être trop bref, empêchant une recharge complète de la capacité C. Cela perturbe la commande du hachage de la tension d'entrée lorsque la capacité C doit alimenter le module de commande 1 du convertisseur DC-DC. Après de nombreux cycles de charge/décharge, la capacité de pompe de charge C peut ne pas être suffisamment chargée pour alimenter le module de commande.

Une solution serait de garantir un courant minimum dans l'inductance L pour garantir un temps de conduction de la diode D2 lors de l'ouverture de l'interrupteur T1. Cependant un courant dans l'inductance non nécessaire entraînerait une surtension sur le réseau secondaire (sortie S).

Une autre solution consisterait à augmenter la fréquence de commutation entre l'ouverture et la fermeture de l'interrupteur supérieur T1. Cependant, les pertes d'énergie liée à la commutation sont alors trop importantes.

US 2007/182395 divulgue un convertisseur selon le préambule de la revendication 1.

Un des buts de l'invention est de garantir le temps de charge de la capacité de pompe de charge afin de permettre d'optimiser le hachage de la tension.

L'invention concerne un convertisseur de tension continue-continue selon la revendication 1.

Grâce à l'invention, la capacité de pompe de charge est suffisamment chargée lorsqu'elle doit alimenter le module de commande de l'interrupteur supérieur. Les moyens de commande remplissent donc une fonction de commande du hachage et une fonction de charge forcée de la capacité qui garantit la qualité du hachage. Ces moyens de commande peuvent se présenter sous la forme d'un module individuel de commande pour chaque interrupteur, ou d'un seul module intégrant les deux commandes.

Dans le domaine automobile, la capacité de pompe de charge est agencée pour maintenir une plage de tension qui est en général de 10 à 15V aux bornes des moyens de commande de l'interrupteur supérieur.

La charge de la capacité de pompe de charge n'est pas tributaire de la valeur du courant de sortie, puisque le potentiel de référence est maintenu, lorsque l'interrupteur supérieur est ouvert, à une valeur parfaitement nulle garantissant une recharge rapide et efficace de la capacité.

On connaissait dans l'art antérieur l'utilisation d'un interrupteur inférieur, comprenant une résistance interne de faible valeur, pour réduire les pertes liées à la conversion pour des courants de fortes intensités. Cependant, cet interrupteur inférieur n'était pas commandé dans le but de forcer la charge de la capacité.

Lorsque l'interrupteur supérieur est ouvert, le courant de sortie décroît progressivement. Si l'interrupteur inférieur est également ouvert, le courant se stabilise naturellement à la valeur nulle, le potentiel de la borne de centre de l'étoile étant alors flottant. Mais si le module de commande garde l'interrupteur inférieur fermé pour imposer un potentiel électrique nul à la borne de centre de l'étoile, le courant de sortie ne se stabilise pas à sa valeur nulle au cours de sa baisse (due à l'interrupteur inférieur toujours fermé) et peut prendre des valeurs négatives.

Grâce à cette forme de réalisation dans laquelle le module de commande n'impose la fermeture de l'interrupteur inférieur (et donc la charge forcée de la capacité de pompe de charge) que lorsque le courant de sortie est positif, le courant de sortie reste positif, la charge forcée étant arrêtée avant qu'il atteigne la valeur nulle. Le courant de sortie se stabilise alors à la valeur nulle et le potentiel de référence demeure à un potentiel (flottant).

Le module de commande est agencé pour fermer l'interrupteur inférieur lorsque l'interrupteur supérieur est ouvert pendant une période de récupération au moins égale à :

$$T\min = 3 \times RC \quad (en\,\mu s) \qquad \text{(Equation simplifiée)}$$

*exemple pour R = 2.4Ω et* C = 470*nF* → *T* min = 3 × 2.4Ω × 470*nF* = 3.4µs

L'invention concerne encore un procédé de commande du convertisseur défini ci-dessus, dans lequel on programme le module de commande pour fermer l'interrupteur inférieur pour imposer un potentiel électrique nul à la borne de centre de l'étoile lorsque l'interrupteur supérieur est ouvert, afin de forcer la charge de la capacité de pompe de charge.

L'invention concerne également un procédé de programmation d'un module de commande pour le convertisseur défini ci-dessus, dans lequel on programme le module pour qu'il ferme l'interrupteur inférieur pour imposer un potentiel électrique nul à la borne de centre de l'étoile lorsque l'interrupteur supérieur est ouvert, afin de forcer la charge de la capacité de pompe de charge.

L'invention sera mieux comprise à l'aide du dessin annexé sur lequel :

-   la figure 1 représente schématiquement un convertisseur en demi-pont selon l'art antérieur ;

- la figure 2 représente schématiquement un convertisseur selon l'art antérieur avec une capacité de pompe de charge et un circuit de commande;
- la figure 3 représente schématiquement le circuit du convertisseur de l'invention avec un interrupteur inférieur commandé par le module de commande;
- la figure 4 représente un chronogramme dans lequel la valeur des potentiels électriques de différents points du circuit de la figure 3 et la valeur du courant de sortie sont représentées en fonction des différentes positions des interrupteurs, le module de commande ordonnant l'ouverture de l'interrupteur inférieur lorsque le courant de sortie dans l'inductance est négatif ; et
- la figure 5 représente un chronogramme dans lequel le module de commande ordonne l'ouverture de l'interrupteur inférieur lorsque le courant de sortie dans l'inductance est positif.

L'invention concerne un convertisseur de tension continue-continue, dit DC-DC, tels que ceux embarqués à bord d'un véhicule automobile. Un convertisseur est un dispositif comportant un circuit de conversion permettant de convertir une tension en une autre tension ou intensité.

En référence à la figure 3, le circuit d'un convertisseur comprend une borne d'entrée E, une borne de sortie S, une borne de commande D et une masse M formant un circuit en étoile à quatre branches avec une borne de centre O.

Le circuit de conversion du convertisseur comprend un interrupteur supérieur T1, connu de l'homme du métier sous sa désignation anglaise « High Side», monté dans la branche de l'étoile reliant la borne d'entrée E avec la borne de centre de l'étoile O, l'interrupteur supérieur T1 étant agencé pour être commandé en ouverture et en fermeture, c'est-à-dire pour se déplacer entre une position d'ouverture et une position de fermeture.

Le circuit de conversion comporte également un interrupteur inférieur T2, connu de l'homme du métier sous sa désignation anglaise « Low Side», monté dans la branche de l'étoile reliant la masse M avec la borne de centre de l'étoile O, également agencé pour être commandé en ouverture et en fermeture.

Une tension d'entrée Ue, en l'espèce de 24V, est imposée entre la borne d'entrée E et la masse du circuit.

On note ici que la commande de l'interrupteur inférieur T2 ne pose pas de problèmes étant donné que cet interrupteur T2 est relié à la masse du circuit; en effet, il est simple de commander un interrupteur relié à un potentiel constant de faible valeur.

Les interrupteurs supérieur T1 et inférieur T2 se présentent ici sous la forme de transistors du type MOSFET ou bipolaires ou IGBT. Ils sont couplés chacun à une diode de courant supérieure D1 et inférieure D2, respectivement. Les diodes supérieure D1 et inférieure D2 sont chacune connectées en parallèle sur lesdits interrupteurs supérieur T1 et inférieur T2.

Le circuit de conversion comprend une inductance L, montée dans la branche de l'étoile reliant la borne de sortie S avec la borne de centre de l'étoile O, un courant de sortie IL circulant dans ladite inductance L. La fonction du convertisseur de tension est de fournir à sa borne de sortie un courant de sortie IL destiné à un consommateur de courant ou une tension pouvant être prélevée à la borne de sortie S. L'inductance se présente ici sous la forme d'une bobine L mais tout autre consommateur de courant pourrait également convenir.

Le circuit de conversion comprend, en outre, un module 10 de commande de l'interrupteur supérieur T1 monté dans la branche de l'étoile reliant la borne de commande D avec la borne de centre de l'étoile O, ainsi qu'un module 20 de commande de l'interrupteur inférieur T2. Les modules de commande 10, 20 forment des moyens de commande des interrupteurs T1, T2. Chaque module de commande 10, 20 est ici un « driver » de transistor et un circuit logique programmable, plus connu sous sa dénomination anglaise FPGA pour « field-programmable gate array », est utilisé pour envoyer le signal logique au module 10.

Le module de commande 10 est alimenté par une tension de commande Ud appliquée entre la borne de commande D du circuit de conversion et sa masse M. Un module de commande doit utiliser une référence pour commander des éléments; comme indiqué précédemment, le module de commande 10 du circuit de conversion utilise comme référence le potentiel électrique Va de la borne de centre de l'étoile O, qui est flottant. Afin de compenser les variations de ce potentiel électrique de référence Va, désigné par la suite "potentiel de référence Va", le circuit de conversion comprend également une capacité de pompe de charge C, connectée en parallèle du module de commande 10 sur la branche de commande du convertisseur. En référence à la figure 3, une résistance R et une diode de charge Dc sont montées en série dans la branche de commande entre la borne de commande D et l'association en parallèle du module de commande 10 et de la capacité de pompe de charge C. La diode de charge Dc empêche avantageusement un courant de circuler vers la borne de commande, la résistance R régulant la valeur du courant dans la branche de commande.

Le module de commande 10 du circuit de conversion de l'invention est agencé pour forcer la charge de la capacité de pompe de charge C lors de l'ouverture de l'interrupteur supérieur T1, en imposant un potentiel électrique nul au potentiel de référence Va.

Dans cet exemple, le module de commande 10 ferme l'interrupteur inférieur T2, après ouverture de l'interrupteur supérieur T1, pendant une période de récupération t permettant de recharger la capacité de pompe de charge C. Ainsi, de manière avantageuse, le potentiel de référence Va est connecté à la masse du circuit de conversion, imposant la charge forcée de la capacité de pompe de charge C.

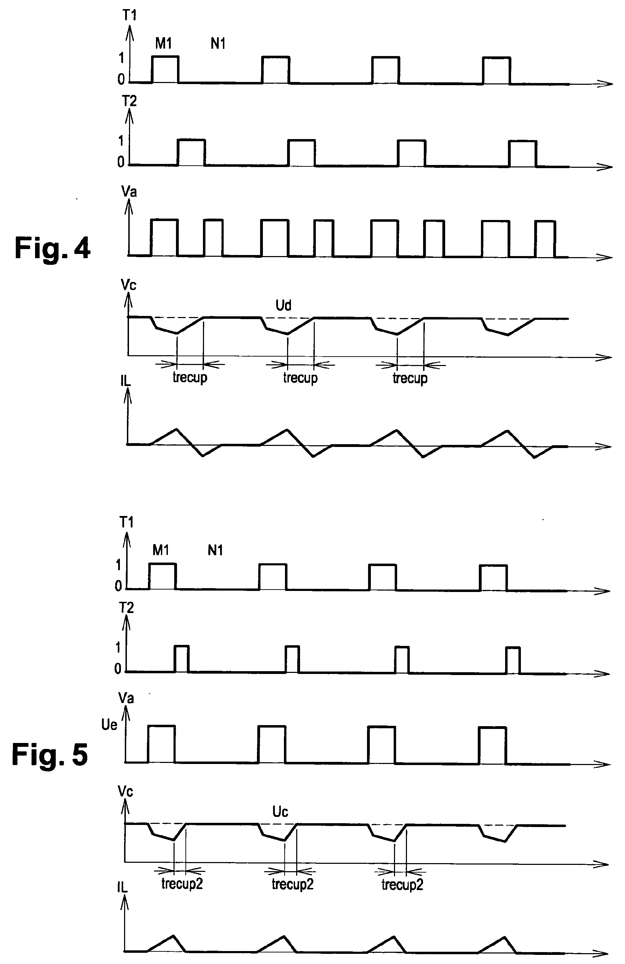

En référence au chronogramme de la figure 4, pendant l'opération de hachage de la tension, lorsque l'interrupteur supérieur T1 est fermé (T1=1) et que l'interrupteur inférieur T2 est ouvert (T2=0), le potentiel de référence Va est égal au potentiel de la borne d'entrée (E), c'est-à-dire égal à la tension d'entrée Ue. La capacité de pompe de charge C se décharge en alimentant le module de commande 10, la valeur Vc de la tension aux bornes de la capacité de pompe de charge C étant décroissante. Pendant que l'interrupteur supérieur T1 est fermé (T1 =1), le courant de sortie IL est croissant. La tension de sortie Us, à la borne de sortie (S) du convertisseur, est croissante.

Par la suite, et par commodité, on désigne la période de fermeture de l'interrupteur supérieur T1 par l'expression "période de hachage positif M1" et la période d'ouverture de l'interrupteur supérieur T1 par l'expression "période de hachage négatif N1".

A la fin de la période de hachage positif M1, le module de commande 10 commande l'ouverture de l'interrupteur supérieur T1 (T1 =0); le courant de sortie IL se met alors à décroître dans l'inductance L montée dans la branche de sortie.

Après une brève période de commutation $t_{com}$, non visible sur la figure 4, le module de commande 10 commande la fermeture de l'interrupteur inférieur T2 (T2 =1). De préférence, on configure le module de commande 10 de manière à ce que la période de commutation $t_{com}$ soit la plus courte possible. Cependant, la période de commutation $t_{com}$ n'est pas nulle afin de limiter le risque de court-circuit qui se produirait si les interrupteurs T1 et T2 étaient fermés simultanément.

Suite à la fermeture de l'interrupteur inférieur T2, le potentiel de référence Va est connecté à la masse du circuit de conversion pendant une période de récupération $t_{recup}$ pendant laquelle la capacité de pompe de charge C se recharge. Cette période de récupération $t_{recup}$ est dimensionnée de telle sorte que la capacité de pompe de charge C puisse être complètement rechargée.

La capacité de pompe de charge C étant complètement rechargée, la commande de l'interrupteur supérieure T1 peut être réalisée de manière extrêmement précise, la capacité de pompe de charge C compensant les variations de potentiel Va à la borne de centre de l'étoile O. La commande de l'interrupteur T2 par le module de commande 10 permet ainsi d'optimiser la charge de la capacité de pompe de charge C, donc la commande de l'interrupteur supérieur T1 et, par voie de conséquence, la qualité du hachage et donc de la conversion de tension.

A la fin de la période de récupération $t_{recup}$, l'interrupteur inférieur T2 est déplacé en position ouverte (T2=0) et l'interrupteur inférieur T1 demeure en position ouverte (T1=0); le courant de sortie IL se met alors à croître puis se stabilise à une valeur nulle.

Tant que le courant de sortie IL est négatif dans l'inductance L et l'interrupteur inférieur T2 ouvert, le potentiel électrique de référence Va est égal au potentiel de la borne d'entrée E du circuit, étant donné que la diode supérieure D1 est passante. Lorsque le courant de sortie IL devient nul dans l'inductance L, la diode supérieure D1 est bloquante et le potentiel électrique de référence Va devient flottant.

Selon une autre forme de réalisation de l'invention, en référence à la figure 5 le module de commande 10 commande la fermeture de l'interrupteur inférieur T2 uniquement lorsque le courant de sortie IL est positif dans l'inductance L; autrement dit, il commande la réouverture de l'interrupteur T2 avant que le courant de sortie IL ait atteint sa valeur nulle. On limite ainsi le risque de voir le courant de sortie prendre des valeurs négatives ce qui, comme expliqué plus haut, aurait pour conséquence que le potentiel électrique de référence Va prenne la valeur du potentiel de la borne d'entrée E, ce qui serait préjudiciable à la qualité de la commande du module de commande 10, ce potentiel d'entrée étant relativement élevé. En référence à la figure 5, l'interrupteur inférieur T2 est fermé pendant une période de temps $t_{recup2}$ pendant laquelle le courant de sortie IL dans l'inductance L est toujours positif.

De préférence, le module de commande 10 commande la fermeture de l'interrupteur inférieur T2 immédiatement après l'ouverture de l'interrupteur supérieur T1, ce qui permet d'optimiser la durée pendant laquelle l'interrupteur inférieur T2 peut être fermé et le courant de sortie rester positif.

Selon une forme de réalisation préférée de l'invention, on commande la fermeture de l'interrupteur T2 pendant une période de récupération $t_{recup}$ correspondant au temps de charge minimum de la capacité de pompe de charge C. En limitant la durée de fermeture de l'interrupteur T2, on limite encore plus le risque de faire prendre au courant de sortie des valeurs négatives.

A titre d'exemple, pour une capacité de pompe de charge C de 470nf, une tension de commande Uc de 15 Volts et une résistance R de 2.4 ohm, on calcule un temps de récupération de 3,4 µs.

$$\text{Equation simplifiée}: T\min = 3 \times RC = 3 \times 2.4\Omega \times 470nF = 3.4\mu s$$

**Revendications**

1. Convertisseur de tension continue-continue comprenant une borne d'entrée (E), une borne de sortie (S), une borne de commande (D) et une masse (M) formant un circuit en étoile à quatre branches avec une borne de centre (O), une tension d'entrée étant destinée à être appliquée entre la borne d'entrée et la masse, le convertisseur comprenant :

   - un interrupteur supérieur (T1), monté dans la branche de l'étoile reliant la borne d'entrée (E) avec la borne de centre de l'étoile (O), agencé pour être commandé en ouverture et en fermeture pour hacher la tension d'entrée;
   - un interrupteur inférieur (T2), monté dans la branche de l'étoile reliant la borne de centre de l'étoile (O) à la masse (M), agencé pour être commandé en ouverture et en fermeture;
   - des moyens (10, 20) de commande des interrupteurs supérieur (T1) et inférieur (T2) les moyens de commande (10, 20) étant agencés pour fermer l'interrupteur inférieur (T2) pour imposer un potentiel électrique nul à la borne de centre de l'étoile (O) lorsque l'interrupteur supérieur (T1) est ouvert, afin de forcer la charge de la capacité (C) de pompe de charge;
   - une capacité (C) de pompe de charge, montée en parallèle des moyens de commande (10, 20), agencée pour maintenir une plage de tension prédéfinie aux bornes des moyens de commande (10) de l'interrupteur supérieur (T1);

   **caractérisé par le fait que** le convertisseur comprend une inductance (L), montée dans la branche de l'étoile reliant la borne de sortie (S) avec le centre de l'étoile (O), un courant de sortie (IL) circulant dans ladite inductance (L), les moyens de commande (10, 20) ne fermant l'interrupteur inférieur que tant que le courant de sortie (IL) est positif, les moyens de commande (10, 20) imposant un potentiel électrique nul à la borne de centre de l'étoile (O) immédiatement après l'ouverture de l'interrupteur supérieur (T1) et les moyens de commande (10, 20) étant agencés pour fermer l'interrupteur inférieur (T2) lorsque l'interrupteur supérieur (T1) est ouvert pendant une période de récupération (t) au moins égale à trois fois le produit de la valeur de la capacité (C) par la valeur de la résistance électrique (R) qui est présente entre la capacité et la borne de commande (D).

2. Procédé de commande du convertisseur de la revendication 1 dans lequel on programme les moyens de commande (10, 20) pour fermer l'interrupteur inférieur (T2) pour imposer un potentiel électrique nul à la borne de centre de l'étoile (O) lorsque l'interrupteur supérieur (T1) est ouvert, afin de forcer la charge de la capacité (C) de pompe de charge.

3. Procédé de programmation de moyens de commande (10, 20) pour le convertisseur de la revendication 1, dans lequel on programme les moyens de commande (10, 20) pour qu'ils ferment l'interrupteur inférieur (T2) pour imposer un potentiel électrique nul à la borne de centre de l'étoile (O) lorsque l'interrupteur supérieur (T1) est ouvert, afin de forcer la charge de la capacité (C) de pompe de charge.

**Patentansprüche**

1. Gleichstrom-Gleichstrom-Spannungswandler, umfassend eine Eingangsklemme (E), eine Ausgangsklemme (S), eine Steuerungsklemme (D) und eine Masse (M), die eine Sternschaltung mit vier Verzweigungen mit einer zentralen Klemme (O) bilden, wobei eine Eingangsspannung dazu bestimmt ist, zwischen der Eingangsklemme und der Masse angelegt zu werden, wobei der Wandler umfasst:

   - einen oberen Unterbrecher (T1), der in der Verzweigung des Sterns montiert ist, welche die Eingangsklemme (E) mit der Klemme des Zentrums des Sterns (O) verbindet, der ausgelegt ist, eine Steuerung zur Öffnung und zur Schließung zum Zerhacken der Eingangsspannung zu erhalten;
   - einen unteren Unterbrecher (T2), der in der Verzweigung des Sterns montiert ist, welche die Klemme des Zentrums des Sterns (O) mit der Masse (M) verbindet, der ausgelegt ist, eine Steuerung zur Öffnung und zur Schließung zu erhalten;
   - Steuerungsmittel (10, 20) für den oberen (T1) und unteren (T2) Unterbrecher, wobei die Steuerungsmittel (10, 20) ausgelegt sind, den unteren Unterbrecher (T2) zu schließen, um ein elektrisches Potenzial von Null an die Klemme des Zentrums des Sterns (O) anzulegen, wenn der obere Unterbrecher (T1) offen ist, um die Ladung des Ladungspumpenkondensators (C) zu erzwingen;
   - einen parallel zu den Steuerungsmitteln (10, 20) montierten Ladungspumpenkondensator (C), der ausgelegt ist, einen vordefinierten Spannungsbereich an den Klemmen der Steuerungsmittel (10) des oberen Unterbrechers (T1) aufrechtzuerhalten;

**dadurch gekennzeichnet, dass** der Wandler eine Induktanz (L) umfasst, die in der Verzweigung des Sterns montiert ist, welche die Ausgangsklemme (S) mit dem Zentrum des Sterns (O) verbindet, wobei ein Ausgangsstrom (IL) in der Induktanz (L) zirkuliert, wobei die Steuerungsmittel (10, 20) den unteren Unterbrecher nur schließen, wenn der Ausgangsstrom (IL) positiv ist,
wobei die Steuerungsmittel (10, 20) ein elektrisches Potenzial von Null an die Klemme des Zentrums des Sterns (O) unmittelbar nach der Öffnung des oberen Unterbrechers (T1) anlegen, und
wobei die Steuerungsmittel (10, 20) ausgelegt sind, den unteren Unterbrecher (T2) zu schließen, wenn der obere Unterbrecher (T1) während einer Periode der Rekuperation (t) von mindestens dem Dreifachen des Produkts des Werts des Kondensators (C) und des Werts des elektrischen Widerstands (R) offen ist, der zwischen dem Kondensator und der Steuerungsklemme (D) vorliegt.

2. Verfahren zur Steuerung eines Wandlers nach Anspruch 1, wobei die Steuerungsmittel (10, 20) programmiert werden, den unteren Unterbrecher (T2) zu schließen, um ein elektrisches Potenzial von Null an die Klemme des Zentrums des Sterns (O) anzulegen, wenn der obere Unterbrecher (T1) offen ist, um die Ladung des Ladungspumpenkondensators (C) zu erzwingen.

3. Verfahren zur Programmierung von Steuerungsmitteln (10, 20) für den Wandler nach Anspruch 1, wobei die Steuerungsmittel (10, 20) programmiert werden, den unteren Unterbrecher (T2) zu schließen, um ein elektrisches Potenzial von Null an die Klemme des Zentrums des Sterns (O) anzulegen, wenn der obere Unterbrecher (T1) offen ist, um die Ladung des Ladungspumpenkondensators (C) zu erzwingen.


**Claims**

1. DC to DC voltage converter including an input terminal (E), an output terminal (S), a control terminal (D) and a ground (M) forming a four-branched star circuit with a central terminal (O), an input voltage being intended to be applied between the input terminal and the ground, the converter including:

   - an upper switch (T1), installed in the branch of the star connecting the input terminal (E) with the central terminal of the star (O), arranged to be controlled in opening and closing for chopping the input voltage;
   - a lower switch (T2), installed in the branch of the star connecting the central terminal of the star (O) to the ground (M), arranged to be controlled in opening and closing;
   - means (10, 20) for controlling the upper (T1) and lower (T2) switches; the control means (10, 20) being arranged so as to close the lower switch (T2) in order to impose a zero electric potential on the central terminal of the star (O) when the upper switch (T1) is open, in order to force the charging of the charge pump capacitor (C);
   - a charge pump capacitor (C), installed in parallel with the control means (10, 20), arranged to maintain a predefined voltage range on the terminals of the means for controlling (10) the upper switch (T1);

   **characterized by** the fact that the converter includes an inductance (L), installed in the branch of the star connecting the output terminal (S) with the central terminal of the star (O), an output current (IL) circulating in said inductance (L), the control means (10, 20) only closing the lower switch as long as the output current (IL) is positive, the control means (10, 20) imposing a zero electric potential on the central terminal of the star (O) immediately after the opening of the upper switch (T1), and the control means (10, 20) being arranged so as to close the lower switch (T2) when the upper switch (T1) is open for a recovery period (t) at least equal to three times the product of the value of the capacitor (C) by the value of the electrical resistance (R) which is present between the capacitor and the control terminal (D).

2. Method of controlling the converter according to Claim 1, in which the control means (10, 20) are programmed so as to close the lower switch (T2) in order to impose a zero electric potential on the central terminal of the star (O) when the upper switch (T1) is open, in order to force the charging of the charge pump capacitor (C).

3. Method of programming the control means (10, 20) for the converter according to Claim 1, in which the control means (10, 20) are programmed so as to close the lower switch (T2) in order to impose a zero electric potential on the central terminal of the star (O) when the upper switch (T1) is open, in order to force the charging of the charge pump capacitor (C).

**Fig. 1**

**Fig. 2**

**Fig. 3**

**Fig. 4**

**Fig. 5**

**EP 2 380 267 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2007182395 A